# EUROPÄISCHE PATENTSCHRIFT

(11) **EP 2 753 818 B1**
(45) Veröffentlichungstag und Bekanntmachung des Hinweises auf die Patenterteilung: **28.09.2016**
(21) Anmeldenummer: 12740535.5
(22) Anmeldetag: 16.07.2012
(51) Int. Cl.: F02M 55/00, F16L 37/133, F16L 37/14

(54) **STECKVERBINDUNG MIT SICHERUNGSKÖRPER UND STECKERKÖRPER**
SOCKET CONNECTOR WITH SECURE ELEMENT AND SOCKET ELEMENT
DISPOSITIF DE RACCORDEMENT AVEC ELEMENT DE VERROUILLAGE ET RACCORD

(30) Priorität: 07.09.2011 DE 102011082224
(43) Veröffentlichungstag der Anmeldung: 16.07.2014
(73) Patentinhaber: Robert Bosch GmbH, 70442 Stuttgart (DE)
(72) Erfinder: SCHIEBER-STITZ, Marion, 71522 Backnang (DE); BOTSCHKA, Michael, 73614 Schorndorf (DE); HANSEN, Olof, 70599 Stuttgart (DE)
(86) Internationale Anmeldenummer: PCT/EP2012/063863
(87) Internationale Veröffentlichungsnummer: WO 2013/034343

(56) Entgegenhaltungen:
- EP-A1- 1 698 821
- DE-U1-202005 015 966
- FR-A1- 2 820 489
- JP-A- 2007 255 669
- US-A1- 2005 189 764
- US-A1- 2006 267 341

## Beschreibung

### Stand der Technik

Die Erfindung geht aus von einer Steckverbindung für medienführende Leitungen mit einem Sicherungskörper und einem Steckerkörper nach der Gattung des Patentanspruchs 1.

Derartige Steckverbindungen werden beispielsweise bei Kraftstoffeinspritzsystemen bzw. Kraftstoffrücklaufleitungen oder auch in Hydraulikleitungen eingesetzt. Dazu weist eine derartige Steckverbindung Leitungsanschlüsse zum Anschließen einer medienführenden Leitung auf. Bei Einsatz in einem Kraftstoffeinspritzsystem ist am Steckerkörper einer derartigen Steckverbindung zudem ein Anschluss zum Anschließen eines Kraftstoffinjektors vorgesehen. Um den Steckerkörper am Anschluss eines Injektors zu fixieren bzw. arretieren oder diesen wieder zu lösen, umfasst eine derartige Steckverbindung einen Sicherungskörper, der am Steckerkörper beweglich aufgenommen ist und in dessen entriegelter Position der Injektor ungesichert an dem Steckerkörper ist, während demgegenüber in dessen verriegelter Position der Injektor am Anschluss des Steckerkörpers gesichert bzw. fixiert ist.

Aus der DE 102 40 130 A1 oder JP 2007-255669 A ist eine Steckverbindung für medienführende Leitungen wie beispielsweise Hydraulikleitungen oder Kraftstoffleitungen von Verbrennungsmotoren bekannt, wobei die Steckverbindung aus einem Steckerkörper mit Leitungsanschlüssen für die medienführenden Leitungen und mit einem Anschluss zum Einsatz eines Bauteils wie z.B. eines Kraftstoffinjektors, und einem hülsenförmigen Sicherungskörper gebildet ist. Dabei ist der Steckerkörper über Rastlaschen formschlüssig mit einem Bauelement wie einem Injektor verbindbar. Zur Sicherung der Rastlaschen ist der hülsenförmige Sicherungskörper über die Rastlaschen bewegbar, wobei das Bauelement mittels eines Rasthakens fixierbar ist. Ein Lösen des hülsenförmigen Sicherungskörpers beispielsweise während des Transports der Hydraulikleitung wird durch eine formschlüssige und unlösbare Verbindung zwischen dem Steckerkörper und dem den Steckerkörper im wesentlichen vollständig umfassenden hülsenförmigen Sicherungskörper verhindert. Dies wird durch ein Zwei-Komponenten-Spritzgieß-Herstellungsverfahren ermöglicht, mit welchem die Steckverbindung gefertigt wird, wobei der Steckerkörper und der hülsenförmige Sicherungskörper aus zwei unterschiedlichen Materialien gebildet sind und der hülsenförmige Sicherungskörper das Formwerkzeug für den Steckerkörper bildet, so dass der Steckerkörper in dem hülsenförmigen Sicherungskörper unverlierbar aufgenommen ist.

### Vorteile der Erfindung

Die Steckverbindung mit den kennzeichnenden Merkmalen des Patentanspruchs 1 hat den Vorteil, dass sowohl die entriegelte Position als auch die verriegelte Position der erfindungsgemäßen Steckverbindung als Rastpositionen ausgebildet sind, in die der Sicherungskörper mittels eines entsprechenden Rastelements verrastet; indem die Entriegelungsposition ferner dadurch charakterisiert ist, dass außer der zugeordneten Rastkontur noch mindestens ein zusätzlicher Absatz an dem Steckerkörper angeordnet ist, welcher als Anschlag für ein weiteres Rastelement des Sicherungskörpers dient, wird erfindungsgemäß sichergestellt, dass der Sicherungskörper verliersicher am Steckerkörper aufgenommen ist. Im Unterschied zu einem aus dem Stand der Technik bekannten Steckverbindungssystem, das mittels eines Zweikomponenten-Spritzgießverfahrens hergestellt wird und aufgrund dessen der Sicherungskörper unverlierbar den Steckerkörper umschließt, ist bei der erfindungsgemäßen Steckverbindung die Verliersicherheitsfunktion dadurch erfüllt, dass einerseits das erste Rastelement und die der Entriegelungsposition zugeordnete erste Rastkontur und andererseits das mindestens weitere Rastelement und der in der Entriegelungsposition zugeordnete Absatz so zusammenwirkend ausgeführt sind, dass das weitere Rastelement des am Steckerkörper aufgenommenen Sicherungskörpers nicht über die Entriegelungsposition hinaus in Entriegelungsrichtung bewegt werden kann. Erfindungsgemäß wird dadurch ein unbeabsichtigtes Lösen der Verbindung zwischen Sicherungskörper und Steckerkörper blockiert und mithin eine verliersichere Aufnahme des Sicherungskörpers am Steckerkörper erzielt. Bei der erfindungsgemäßen Steckverbindung sind ferner die einzelnen Bauteilkomponenten, d.h. der Steckerkörper und der zugeordnete Sicherungskörper, getrennt voneinander und somit kostengünstig herstellbar, so dass auch komplizierte Geometrien der Bauteilkomponenten unter Verwendung unterschiedlicher Materialien für die einzelnen Bauteilkomponenten technisch realisierbar sind.

Weitere vorteilhafte Weiterbildungen und Ausgestaltungen der erfindungsgemäßen Steckverbindung ergeben sich durch die in den Unteransprüchen aufgeführten Maßnahmen.

### Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 eine perspektivische Ansicht einer erfindungsgemäßen Steckverbindung mit einem Sicherungskörper und einem zugeordneten Steckerkörper, wobei der Sicherungskörper an einem zugeordneten Steckerkörper in einer ersten Rastposition aufgenommen ist, welche einer Entriegelungsposition entspricht,
Fig. 2 eine perspektivische Ansicht der erfindungsgemäßen Steckverbindung, wobei der Sicherungskörper an dem zugeordneten Steckerkörper in einer zweiten Rastposition aufgenommen ist, welche einer Verriegelungsposition entspricht, und
Fig. 3 eine perspektivische Teilansicht einer Ausführungsform des Sicherungskörpers der erfindungsgemäßen Steckverbindung, wobei am Ende eines Rastarms des Sicherungskörpers ein erstes Rastelement und zwei dazu seitlich angeordnete zweite Rastelemente angeformt sind, die zur Verrastung am Steckerkörper dienen.

### Beschreibung der Ausführungsbeispiele

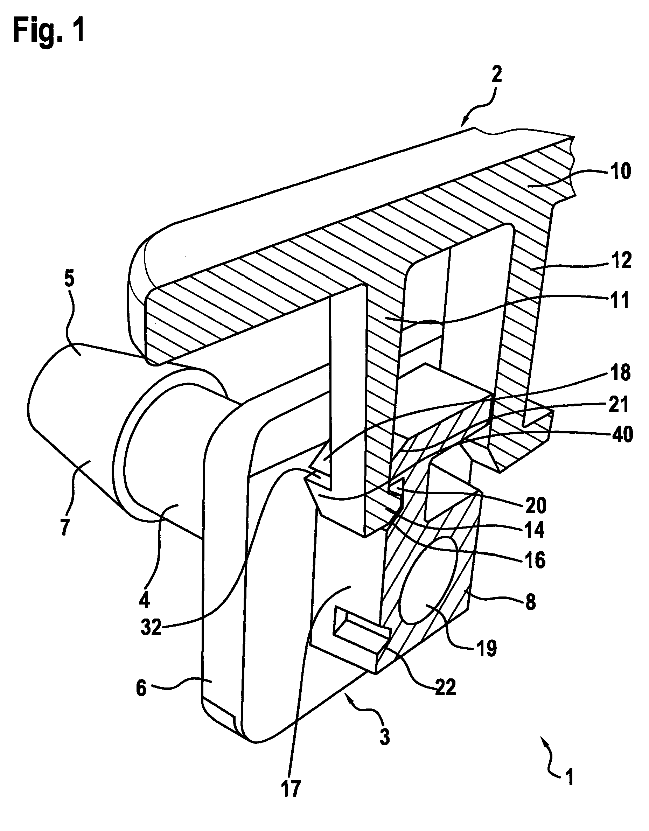

Fig. 1 zeigt in einer perspektivisch gehaltenen Teilansicht eine in ihrer Gesamtheit mit 1 bezeichnete erfindungsgemäße Steckverbindung, die einen Sicherungskörper 2 und einen Steckerkörper 3 umfasst, wobei der Sicherungskörper 2 an dem Steckerkörper 3 in einer ersten Rastposition aufgenommen ist, bei der sich die Steckverbindung im entriegelten Zustand befindet. An dem Steckerkörper 3 ist ein seitlich aus einer Bundfläche 6 hervorstehend ausgebildeter Leitungsanschluss 4 angebracht, der an seinem freien Ende 5 eine Kegelfläche 7 aufweist, um das Aufschieben bzw. Aufstecken einer flexiblen rohrförmigen Leitung zu erleichtern. Dabei dient die Bundfläche 6 als Begrenzungsanschlag für einen auf den Leitungsanschluss 4 aufgeschobenen Leitungsabschnitt. An dem Steckerkörper 3 ist ein nicht dargestellter zweiter Leitungsanschluss vorgesehen, der gegenüberliegend zum Leitungsanschluss 4 am Steckerkörper 3 angeformt ist und mit dem ersten Leitungsanschluss 4 über einen Durchgang bzw. Durchlass 19 mit kreisförmigem Leitungsquerschnitt in Verbindung steht, und ferner ein ebenfalls nicht dargestellter Bauelementanschluss für den Anschluss eines Bauelements wie beispielsweise eines Kraftstoffinjektors.

Auf der dem Leitungsanschluss 4 abgewandten Seite der Bundfläche 6 weist der Steckerkörper 3 eine von dem Durchlass 19 durchsetzte Struktur 8 auf, an der der Sicherungskörper 2 verschieblich aufgenommen ist. Zur Aufnahme des Sicherungskörpers 2 weist die Struktur 8 an einer Seitenfläche 17 eine erste und eine zweite Rastkontur 16, 22 auf, wobei die erste Rastkontur 16 oberhalb einer Projektion des Durchlasses 19 auf die Seitenfläche 17 und die zweite Rastkontur 22 unterhalb einer derartigen Projektion angeordnet ist.

Der Sicherungskörper 2 umfasst einen Deckelabschnitt 10, an dem senkrecht dazu zwei Arme 11, 12 beabstandet zueinander angeformt sind. Dabei ist der erste Arm als elastisch federnder Rastarm 11 ausgebildet, während der zweite Arm als starr ausgebildeter Führungsarm 12 fungiert. Der lichte Abstand zwischen den beiden Armen 11, 12 des Sicherungskörpers 2 entspricht der lateralen Abmessung der Struktur 8, welche durch den Abstand zwischen der mit Rastkonturen 16, 22 versehenen Seitenfläche 17 und der ihr gegenüberliegenden Seitenfläche definiert ist, so dass in beiden Rastpositionen des Sicherungskörpers 2 dessen Arme 11, 12 jeweils an der Seitenfläche 17 und der ihr gegenüberliegenden Seitenfläche der Struktur 8 anliegen. Am vom Deckelabschnitt 10 abgewandten Ende des Rastarms 11 ist auf der dem Führungsarm 12 zugewandten Seite des Rastarms 11 ein erstes hakenförmiges Rastelement 14 ausgebildet. Im entriegelten Zustand der erfindungsgemäßen Steckverbindung 1 greift das erste Rastelement 14 des Sicherungskörpers 2 in die als Rastkontur ausgebildete erste Rastnut 16 ein, welche im oberen Bereich der Seitenfläche 17 der Struktur 8 des Steckerkörpers 3 angeordnet ist, während an der gegenüberliegenden Seitenfläche der Struktur 8 der Führungsarm 12 anliegt. Ein zweites Rastelement 40, das am Ende des Rastarms 11 des Sicherungskörpers so im rechten Winkel zum ersten Rastelement 14 angeformt ist, dass es bei bestimmungsgemäßer Montage des Sicherungskörpers 2 am Steckerkörper 3 der Bundfläche 6 des Steckerkörpers 3 zugewandt ist, untergreift in der Entriegelungsposition formschlüssig einen Absatz 18. Dieser Absatz 18 ist an der Seitenfläche 17 der Struktur 8 vorspringend angeformt und erstreckt sich zwischen der Bundfläche 6 und der ersten bzw. oberen Rastnut 16.

Die Breite der Rastnut 16 gesehen in der vertikalen Erstreckung weist gegenüber der vertikalen Breite des Rastelements 14 ein Übermaß auf, so dass in Raststellung das Rastelement 14 mit seiner Unterseite an der Unterseite der oberen Rastnut 16 anliegt, während das zweite Rastelement 40 mit seiner planen Oberseite 32 als Anschlagfläche an der Unterseite des aus der Seitenfläche 17 herausragenden Absatzes 18 formschlüssig anliegt, wobei zwischen der Oberseite des ersten Rastelements 14 und der zugewandten Oberseite der Rastnut 16 ein Freiraum 20 bleibt. Dadurch wird sichergestellt, dass sich bei einer vertikalen Aufwärtsbewegung des Sicherungskörpers 2 relativ zum Steckerkörper 3 nach oben der Sicherungskörper 2 nicht ungewollt vom Steckerkörper 3 lösen kann, da das gegen den Absatz 18 in Anschlag gestellte zweite Rastelement 40 eine Aufwärtsbewegung und somit den vertikalen Weg entgegen der Sicherungsrichtung durch den Freiraum 20 hindurch blockiert, so dass dem ersten Rastelement 14 ein möglicher Aufstützpunkt an der Oberseite der oberen Rastnut 16 für eine dazu erforderliche seitliche Auslenkung des ersten Rastelements 14 nach außen mit entsprechendem Ausspreizen des Rastarms 11 fehlt.

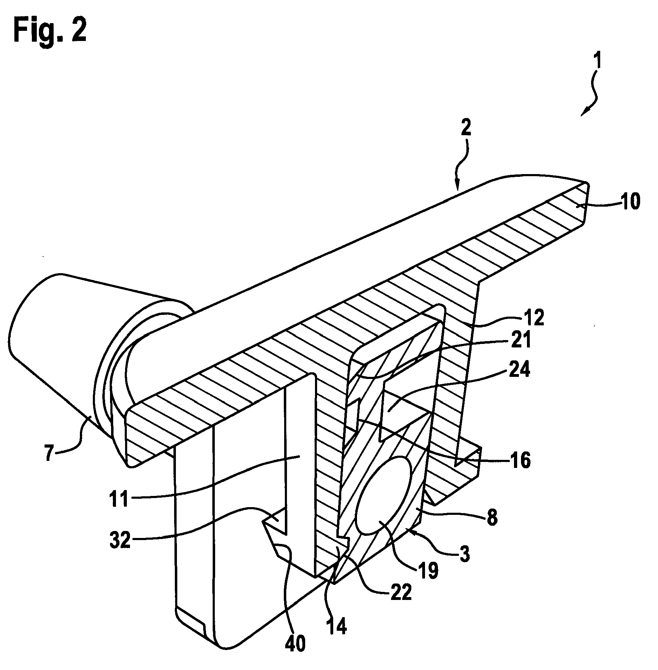

Fig. 2 veranschaulicht ebenfalls in einer perspektivisch gehaltenen Teilansicht die erfindungsgemäße Steckverbindung 1, wobei der Sicherungskörper 2 sich in einer zweiten bzw. unteren Rastposition an dem Steckerkörper 3 befindet. Diese zweite Rastposition entspricht der verriegelten Position der Steckverbindung 1. Um in diese Verriegelungsposition zu gelangen, wird der Sicherungskörper 2 aus der in Fig. 1 dargestellten entriegelten Position in Sicherungsrichtung bzw. Verriegelungsrichtung vertikal nach unten gedrückt. Aufgrund des auf den Deckelabschnitt 10 des Sicherungskörpers 2 ausgeübten Drucks löst sich der Rastarm 11 aus der ersten Rastnut 16. Die darauf erfolgende Abwärtsbewegung des Sicherungskörpers 2 entlang der Struktur 8 des Steckerkörpers 3 endet, indem das erste Rastelement 14 in die als weitere Rastkontur ausgebildete zweite bzw. untere Rastnut 22 der Struktur 8 formschlüssig eingreift und darin verrastet. Diese zweite Rastnut 22 ist vertikal beabstandet zur ersten Rastnut 16 an derselben Seitenfläche 17 der Struktur 8 des Steckerkörpers 3 vorgesehen und ist als Gegenkontur zum ersten Rastelement 14 komplementär zu diesem ausgebildet, d.h. die Rastnut 22 ist derart an die Größe und Form des ersten Rastelements 14 angepasst, dass praktisch kein vertikaler Freiraum bleibt, wenn das erste Rastelement 14 in die zweite Rastnut 22 einrastet. Das zweite Rastelement 40 ist in dieser verriegelten Position inaktiv.

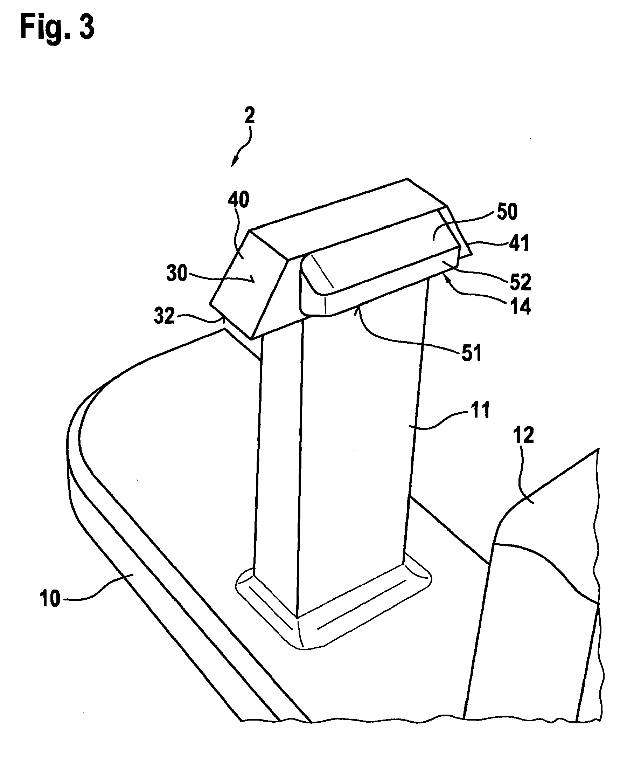

Fig. 3 zeigt eine perspektivisch gehaltene Teildarstellung des Sicherungskörpers 2 der erfindungsgemäßen Steckverbindung 1 in einer Unteransicht. Der Rastarm 11 und der parallel zu diesem angeordnete Führungsarm 12 sind an der Unterseite des Deckelabschnitts 10 angeformt und verlaufen in ihrer jeweiligen Längserstreckungsrichtung vertikal zur Unterseite des Deckelabschnitts 10. An dem von der Unterseite des Deckelabschnitts 10 wegweisenden Ende des Rastarms 11 ist das erste Rastelement 14 an der dem Führungsarm 12 zugewandten Seite des Rastarms 11 angeformt. Wie Fig. 3 veranschaulicht, ist das erste Rastelement 14 als Vorsprung mit etwa trapezförmigem Querschnitt ausgebildet, wobei die Unterseite 50 und Oberseite 51 jeweils als Schrägflächen ausgebildet sind, die durch eine vertikal und parallel zur Längserstreckung des Rastarms 11 verlaufende Anlagefläche 52 miteinander verbunden sind. Dadurch wird sowohl das Einrasten in die beiden Rastnuten 16, 22 als auch das Lösen aus den Rastnuten 16, 22 erleichtert. Ferner ergibt sich für die Verriegelungsposition, d.h. wenn das erste Rastelement 14 in die untere Rastnut 22 eingreift, eine formschlüssige Verbindung, da die Form dieser Rastnut 22 komplementär zu der Form des ersten Rastelements 14 ausgebildet ist, indem sowohl die Unterseite als auch die Oberseite der Rastnut 22 als Schrägflächen mit demselben Anstellwinkel wie die Schrägflächen 50, 51 des Rastelements 14 ausgebildet sind und diese Schrägflächen als Anschrägungen über eine vertikal verlaufende Rastnutinnenfläche miteinander verbunden sind, der in der Verriegelungsposition die Anlagefläche 52 des ersten Rastelements 14 zugewandt ist. Aufgrund der Anschrägungen weist diese Rastnut 22 einen Öffnungswinkel auf, so dass sich die vertikale Breite dieser Rastnut nach außen hin kontinuierlich erweitert, um das Einrasten und Ausrasten des ersten Rastelements 14 zu unterstützen. Im Unterschied dazu ist die obere Rastnut 16 lediglich an ihrer unteren Begrenzung mit einer Anschrägung versehen, wodurch sich die vertikale Breite der Rastnut 16 nach außen hin kontinuierlich erweitert, um das Einrasten des aus der Verriegelungsposition kommenden Sicherungskörpers 2 und dessen Ausrasten in Verriegelungsrichtung zu erleichtern, während die Oberkante der Rastnut 16 im Ausführungsbeispiel rechtwinklig zu deren Innenseite angeordnet ist.

Bei der in Fig. 3 veranschaulichten Ausführungsform des Sicherungskörpers 2 sind zwei zweite Rastelemente 40, 41 vorgesehen, die am freien Ende des Rastarms 11 zu beiden Seiten des ersten Rastelements 14 und jeweils rechtwinklig, d.h. um 90° versetzt zu diesem angeformt sind. Beide Rastelemente 40, 41 sind als Rastnasen in Größe und Form identisch ausgebildet und weisen einen dreieckigen Querschnitt auf; dabei weist jede der beiden Rastnasen 40, 41 jeweils eine Anlagefläche 32 auf, die dem Deckelabschnitt 10 zugewandt ist und parallel zum Deckelabschnitt 10 verläuft, sowie eine zum freien Ende des Rastarms 11 hin verlaufende Schrägfläche 30. Den bei dieser Ausführungsform der erfindungsgemäßen Steckverbindung 1 am Rastarm 11 des Sicherungskörpers 2 vorgesehenen zwei Rastnasen 40, 41, die das erste Rastelement 14 flankieren, sind zwei an der Struktur 8 des Steckerkörpers 3 vorspringend angeformte Absätze 18 zugeordnet, welche die erste Rastnut 16 seitlich flankieren.

Zur Montage der erfindungsgemäßen Steckverbindung 1 wird der Sicherungskörper 2 von oben mit beiden Armen 11, 12 auf die Struktur 8 des Steckerkörpers 3 so aufgesetzt, dass das am Ende des Rastarms 11 angeordnete zentrale Rastelement 14 auf einer im oberen Kantenbereich der Struktur 8 befindlichen Anschrägung 21 aufliegt, während der Führungsarm 12 an der der Seitenfläche 17 gegenüberliegenden Seitenfläche der Struktur 8 anliegt. Anschließend wird der Sicherungskörper 2 vertikal nach unten bewegt, d.h. in Sicherungsrichtung, wobei der Führungsarm 12, der inelastisch bzw. starr ausgebildet ist, entlang der ihm zugewandten Seitenfläche der Struktur 8 nach unten gleitet, und der Rastarm 11, der im Unterschied zum Führungsarm 12 elastisch federnd ausgebildet ist, während der Abwärtsbewegung nach unten entlang der Anschrägung 21 zunächst nach außen gespreizt bzw. ausgelenkt wird, bis bei einer weiteren Abwärtsbewegung nach unten das zentrale Rastelement 14 in die Höhe der oberen Rastnut 16 gelangt und dort in die obere Rastnut 16 eingreift und einschnappt. Durch weitere Abwärtsbewegung in Sicherungsrichtung überwindet das zentrale Rastelement 14 den Freiraum 20 innerhalb der Rastnut 16 und gelangt mit seiner unteren Schrägfläche 50 in Anschlag zu einer unteren Begrenzung der Rastnut 16, die als Schrägfläche ausgebildet ist. In dieser Stellung gelangt das 90° seitlich versetzt zum zentralen Rastelement 14 angeordnete zweite Rastelement 40 in eine vertikale Position unterhalb des neben der oberen Rastnut 16 angeordneten Absatzes 18, in welcher dieses Rastelement 40 mit seiner dem Deckelabschnitt 10 zugewandten Oberseite 32 an der Unterseite des Absatzes 18 bündig anliegt und mit dem Absatz 18 eine formschlüssige Verbindung bildet. Diese Stellung entspricht der in Fig. 1 dargestellten Entriegelungsposition.

Aus dieser entriegelten Position, die in Fig. 1 veranschaulicht ist, wird durch erneut ausgeübten Druck auf den Deckelabschnitt 10 des Sicherungskörpers 2 das erste bzw. zentrale Rastelement 14 seitlich nach außen ausgelenkt; dieses Auslenken aus der Raststellung wird dadurch erleichtert, dass die als Schrägfläche ausgebildete Unterseite 50 des zentralen Rastelements 14 bei dieser Bewegung entlang der die untere Begrenzung der oberen Rastnut 16 bildenden Schrägfläche gleitet, wobei ein seitliches Ausspreizen des Rastarms 11 erfolgt. Bei weiterhin wirkendem Druck auf den Deckelabschnitt 10 erfolgt eine vertikale Abwärtsbewegung des Sicherungskörpers 2 entlang der Struktur 8 des Steckerkörpers 3, d.h. in Sicherungs- bzw. Verriegelungsrichtung, wobei der inelastische Führungsarm 12 an der von einer materialsparenden Ausnehmung 24 unterbrochenen Seitenfläche entlang gleitet und der Rastarm 11 in ausgespreizter Stellung entlang der gegenüberliegenden Seitenfläche 17 gleitet, bis das zentrale Rastelement 14 in die untere Rastnut 22 gelangt, dort einschnappt und verrastet, wobei der Rastarm 11 aus seiner nach außen gespreizten Stellung zurückschwenkt und an der Seitenfläche 17 bündig anliegt. Diese Stellung entspricht der verriegelten Position gemäß Fig. 2, bei der gleichzeitig durch eine in den Figuren nicht dargestellte Zusatzfunktion ein - ebenfalls in den Figuren nicht dargestellter - Injektorkörper an der erfindungsgemäßen Steckverbindung 1 fixiert bzw. arretiert ist.

Wird in dieser verriegelten Stellung, die in Fig. 2 veranschaulicht ist, der Sicherungskörper 2 relativ zum Steckerkörper 3 nach oben, d.h. in Entriegelungsrichtung gezogen, so wird das zentrale Rastelement 14 aus der unteren Rastnut 22 quer zur Bewegungsrichtung des Sicherungskörpers seitlich nach außen gelenkt. Dies wird dadurch erleichtert, dass in diesem Fall die als Schrägfläche ausgebildete Oberseite 51 des zentralen Rastelements 14 entlang der die obere Begrenzung der unteren Rastnut 22 bildende Schrägfläche sukzessive allmählich nach oben gleitet, wobei wiederum ein seitliches Ausspreizen des Rastarms 11 erfolgt, wodurch die verriegelte Stellung gelöst wird und der Sicherungskörper 2 in Entriegelungsrichtung nach oben gleitet, bis das zentrale Rastelement 14 in die obere Rastnut 16 einschnappt und einrastet. Indem in dieser Stellung, die der Entriegelungsposition gemäß Fig. 1 entspricht, gleichzeitig die nach oben weisende Anschlagfläche 32 des zweiten Rastelements 40 gegen die vertikal nach unten weisende Unterseite des aus der Seitenfläche 17 der Struktur 8 vorspringend angeformten Absatzes 18 anschlägt, wird dadurch eine ungewollte weitere Aufwärtsbewegung des Sicherungskörpers 2 und damit ein unbeabsichtigtes Verlieren des Sicherungskörpers 2 verhindert, da der Absatz 18 zusammen mit dem zweiten Rastelement 40 eine weitere Aufwärtsbewegung in Entriegelungsrichtung blockiert, so dass dem ersten Rastelement 14 der Kontakt mit der oberen Begrenzung der Rastnut 16 wegen des in vertikaler Richtung zwischen der Oberseite 51 des zentralen Rastelements 14 und der angrenzenden Oberseite der oberen Rastnut 16 dazwischen liegenden Freiraums 20 versperrt ist und somit für ein seitliches Auslenken des zentralen Rastelements 14 ein oberer Aufstützpunkt fehlt. Die formschlüssige Verbindung des zweiten Rastelements 40 über seine Anschlagfläche 32 mit dem vorspringenden Absatz 18 fungiert somit als Verliersicherung. In dieser Stellung ist durch eine in den Figuren nicht dargestellte Zusatzfunktion die Verbindung zwischen einem - ebenfalls in den Figuren nicht dargestellten - Injektorkörper und der Steckverbindung 1 gelöst.

Eine - gewünschte - Demontage der erfindungsgemäßen Steckverbindung 1 ist mithin dann möglich, wenn in der Entriegelungsposition der Rastarm 11 durch manuell ausgeübten seitlichen Zug quer zur bestimmungsgemäßen Bewegungsrichtung des Sicherungskörpers 2 aus seiner verrasteten Stellung gelöst wird und zugleich der Sicherungskörper 2 in einer Aufwärtsbewegung, d.h. in Entriegelungsrichtung von dem Steckerkörper 3 abgezogen wird.

Die alternative Ausführungsform der erfindungsgemäßen Steckverbindung 1, bei der neben dem zentralen Rastelement 14 insgesamt zwei nebengeordnete Rastelemente 40, 41 vorgesehen sind, die um jeweils 90° seitlich versetzt zum Rastelement 14 angeordnet sind, hat den Vorteil, dass in der entriegelten Stellung der Steckverbindung 1 beide Rastelemente 40, 41 jeweils eine formschlüssige Verbindung mit zwei Absätzen 18 bilden, die jeweils - quer zur bestimmungsgemäßen Bewegungsrichtung des Sicherungskörpers - seitlich neben der oberen Rastnut 16 an der Seitenfläche 17 angeformt sind, so dass - im Unterschied zur ersten Ausführungsform mit lediglich einem zweiten Rastelement 40 - das Auftreten von Querkräften an den Rastelementen 40, 41 praktisch minimiert ist, wenn die Rastelemente 40, 41 in Anschlag zu den jeweils zugeordneten als Gegenkonturen 18 ausgebildeten Absätzen an der Seitenfläche 17 der Struktur 8 kommen.

Zusammenfassend ist für die erfindungsgemäße Steckverbindung 1 mithin charakteristisch, dass ein zentrales Rastelement 14 des Sicherungskörpers 2 für eine Entriegelungsposition der Steckverbindung 1 in eine erste Rastkontur 16 und für eine Verriegelungsposition der Steckverbindung 1 in eine zweite Rastkontur 22 bringbar ist, wobei in der Entriegelungsposition als Verliersicherung wenigstens ein weiteres Rastelement 40, 41 des Sicherungskörpers 2 gegen einen am Steckerkörper 3 angeordneten Anschlag 18 in der Entriegelungsrichtung angestellt ist und in der Verriegelungsposition, wenn das erste Rastelement 14 in die zweite Rastkontur 22 eingreift, das erste Rastelement 14 und die zweite Rastkontur eine formschlüssige Verbindung bilden.

## Patentansprüche

1. Steckverbindung für medienführende Leitungen mit einem Steckerkörper, an welchem wenigstens ein Anschluss vorgesehen ist, und einem Sicherungskörper, wobei der Sicherungskörper in einer Sicherungsrichtung und in einer Entriegelungsrichtung zwischen einer ersten und einer zweiten Anschlagposition bewegbar an dem Steckerkörper aufgenommen ist, wobei ein an dem Sicherungskörper (2) angeordnetes Rastelement (14) für eine Entriegelungsposition der Steckverbindung (1) in eine erste Rastkontur (16) des Steckerkörpers (3) und für eine Verriegelungsposition der Steckverbindung (1) in eine zweite Rastkontur (22) des Steckerkörpers (3) bringbar ist und wobei in der Entriegelungsposition mindestens ein zweites Rastelement (40, 41) des Sicherungskörpers (2) in der Entriegelungsrichtung gegen mindestens einen am Steckerkörper (3) angeordneten Absatz (18) angestellt ist, **dadurch gekennzeichnet, dass** der Sicherungskörper (2) zwei sich von einem Deckelabschnitt (10) forterstreckende und parallel zueinander beabstandete Arme (11, 12) aufweist, wobei ein Arm als federnder Rastarm (11) mit den daran angeformten Rastelementen (14; 40, 41) ausgebildet ist, während der andere Arm als starr ausgebildeter Führungsarm (12) dient.

2. Steckverbindung nach Anspruch 1, **dadurch gekennzeichnet, dass** die der Entriegelungsposition zugeordnete erste Rastkontur (16) derart bemessen ist, dass deren in Bewegungsrichtung des Sicherungskörpers (2) gesehene Breite ein Übermaß gegenüber der entsprechenden Breite des ersten Rastelements (14) aufweist.

3. Steckverbindung nach Anspruch 2, **dadurch gekennzeichnet, dass** in der Entriegelungsposition das erste Rastelement (14) des Sicherungskörpers (2) in Verriegelungsrichtung mit einer Anlageseite gegen eine der zweiten Rastkontur (22) zugewandten Begrenzungsfläche der ersten Rastkontur (16) derart angestellt ist, dass in Gegenrichtung zwischen dem ersten Rastelement (14) und der der zweiten Rastkontur (22) abgewandten anderen Begrenzungsfläche der ersten Rastkontur (16) ein Freiraum (20) bleibt.

4. Steckverbindung nach einem der Ansprüche 1 bis 3, **dadurch gekennzeichnet, dass** die zweite Rastkontur (22) derart komplementär bezüglich des ersten Rastelements (14) ausgebildet ist, dass in der Verriegelungsposition, wenn das erste Rastelement (14) in die zweite Rastkontur (22) eingreift, das erste Rastelement (14) und die zweite Rastkontur (22) eine formschlüssige Verbindung bilden.

5. Steckverbindung nach einem der Ansprüche 1 bis 4, **dadurch gekennzeichnet, dass** die Rastkonturen (16, 22) und der mindestens eine Absatz (18) an einer zur Aufnahme des Rastarms (11) vorgesehenen Anlageseite (17) des Steckerkörpers (3) ausgebildet sind.

6. Steckverbindung nach Anspruch 5, **dadurch gekennzeichnet, dass** der mindestens eine Absatz (18) quer zur Bewegungsrichtung des Sicherungskörpers (2) seitlich versetzt zur ersten Rastkontur (16) an der Anlageseite (17) des Steckerkörpers (3) angeordnet ist.

7. Steckverbindung nach einem der Ansprüche 1 bis 6, **dadurch gekennzeichnet, dass** in der Entriegelungsrichtung eine dem Deckelabschnitt (10) des Sicherungskörpers (2) zugewandte Anschlagfläche (32) des zweiten Rastelements (40, 41) formschlüssig gegen eine in Verriegelungsrichtung weisende Fläche des mindestens einen Absatzes (18) des Steckerkörpers (3) in Anschlag gestellt ist.

8. Steckverbindung nach einem der Ansprüche 1 bis 7, **dadurch gekennzeichnet, dass** die Rastkonturen (16, 22) jeweils als Rastnuten in einer Anlageseite (17) des Steckerkörpers (3) ausgebildet sind.

9. Steckverbindung nach einem der Ansprüche 1 bis 8, **dadurch gekennzeichnet, dass** zwei Absätze (18) vorgesehen sind, welche jeweils seitlich flankierend zur ersten Rastkontur (16) angeordnet sind, und jedem der zwei Absätze jeweils ein zweites Rastelement (40, 41) zugeordnet ist, wobei die zwei zweiten Rastelemente (40, 41) zu beiden Seiten des ersten Rastelements (14) am Ende des Rastarms (11) des Sicherungskörpers (2) angeordnet sind.

## Claims

1. Plug-type connection for media-carrying lines, comprising a plug body, on which at least one connection is provided, and a securing body, wherein the securing body is held on the plug body such that it can be moved between a first and a second stop position in a securing direction and in an unlocking direction, wherein a latching element (14), which is arranged on the securing body (2), can be moved into a first latching contour (16) of the plug body (3) for an unlocked position of the plug-type connection (1) and into a second latching contour (22) of the plug body (3) for a locked position of the plug-type connection (1), and wherein, in the unlocked position, at least one second latching element (40, 41) of the securing body (2) is adjusted in the unlocking direction against at least one projection (18) which is arranged on the plug body (3), **characterized in that** the securing body (2) has two arms (11, 12) which extend away from a cover section (10) and are spaced apart from one another in a parallel manner, wherein one arm is designed as a spring-action latching arm (11) with the latching elements (14; 40, 41) integrally formed on it, while the other arm serves as a guide arm (12) of rigid design.

2. Plug-type connection according to Claim 1, **characterized in that** the first latching contour (16) which is associated with the unlocked position is dimensioned in such a way that the width of the said first latching contour as seen in the movement direction of the securing body (2) has an oversize in relation to the corresponding width of the first latching element (14).

3. Plug-type connection according to Claim 2, **characterized in that**, in the unlocked position, the first latching element (14) of the securing body (2) is adjusted in the locking direction by way of a bearing side against a boundary surface of the first latching contour (16), which boundary surface faces the second latching contour (22), in such a way that a clearance (20) remains between the first latching element (14) and the other boundary surface of the first latching contour (16), which other boundary surface is averted from the second latching contour (22), in the opposite direction.

4. Plug-type connection according to one of Claims 1 to 3, **characterized in that** the second latching contour (22) is designed in a complementary manner in relation to the first latching element (14) in such a way that, in the locked position, when the first latching element (14) engages into the second latching contour (22), the first latching element (14) and the second latching contour (22) form an interlocking connection.

5. Plug-type connection according to one of Claims 1 to 4, **characterized in that** the latching contours (16, 22) and the at least one projection (18) are formed on a bearing side (17) of the plug body (3), which bearing side is intended to receive the latching arm (11).

6. Plug-type connection according to Claim 5, **characterized in that** the at least one projection (18) is arranged on the bearing side (17) of the plug body (3) in a manner laterally offset in relation to the first latching contour (16) transverse to the movement direction of the securing body (2).

7. Plug-type connection according to one of Claims 1 to 6, **characterized in that**, in the unlocking direction, a stop surface (32) of the second latching element (40, 41), which stop surface faces the cover section (10) of the securing body (2), stops in an interlocking manner against a surface of the at least one projection (18) of the plug body (3), which surface points in the locking direction.

8. Plug-type connection according to one of Claims 1 to 7, **characterized in that** the latching contours (16, 22) are each designed as latching grooves in a bearing side (17) of the plug body (3).

9. Plug-type connection according to one of Claims 1 to 8, **characterized in that** two projections (18) are provided, which are each arranged so as to laterally flank the first latching contour (16), and each of the two projections has an associated second latching element (40, 41), wherein the two second latching elements (40, 41) are arranged at the end of the latching arm (11) of the securing body (2) on both sides of the first latching element (14).

## Revendications

1. Connexion à enfichage pour conduites conduisant un fluide, comprenant un corps de fiche, sur lequel se trouve au moins un raccord, et un corps de blocage, le corps de blocage étant accueilli sur le corps de fiche de manière à pouvoir être déplacé dans une direction de blocage et dans une direction de déverrouillage entre une première et une deuxième position de butée, un élément d'encliquetage (14) sur le corps de blocage (2) pour une position de déverrouillage de la connexion à enfichage (1) pouvant être amené dans un premier profil d'encliquetage (16) du corps de fiche (3) et pour une position de verrouillage de la connexion à enfichage (1) dans un deuxième profil d'encliquetage (22) du corps de fiche (3) et, dans la position de déverrouillage, au moins un deuxième élément d'encliquetage (40, 41) du corps de blocage (2) étant placé dans la direction du déverrouillage contre au moins un talon (18) disposé sur le corps de fiche (3), **caractérisé en ce que** le corps de blocage (2) possède deux bras (11, 12) qui s'étendent depuis une portion de couvercle (10) et parallèlement l'un à l'autre, un bras étant réalisé sous la forme d'un bras d'encliquetage (11) flexible sur lequel sont formés des éléments d'encliquetage (14 ; 40, 41), alors que l'autre bras sert de bras de guidage (12) de configuration rigide.

2. Connexion à enfichage selon la revendication 1, **caractérisée en ce que** le premier profil d'encliquetage (16) associé à la position de déverrouillage est dimensionné de telle sorte que sa largeur, vue dans la direction de déplacement du corps de blocage (2), présente une surcote par rapport à la largeur correspondante du premier élément d'encliquetage (14).

3. Connexion à enfichage selon la revendication 2, **caractérisée en ce que** dans la position de déverrouillage, le premier élément d'encliquetage (14) du corps de blocage (2) dans la direction de verrouillage est placé avec un côté d'appui contre une surface de délimitation du premier profil d'encliquetage (16) qui fait face au deuxième profil d'encliquetage (22) de telle sorte qu'il reste un espace libre (20) dans la direction inverse entre le premier élément d'encliquetage (14) et l'autre surface de délimitation du premier profil d'encliquetage (16) qui est à l'opposé du deuxième profil d'encliquetage (22).

4. Connexion à enfichage selon l'une des revendications 1 à 3, **caractérisée en ce que** le deuxième profil d'encliquetage (22) est configuré de façon complémentaire par rapport au premier élément d'encliquetage (14) de telle sorte que dans la position de verrouillage, lorsque le premier élément d'encliquetage (14) vient en prise dans le deuxième profil d'encliquetage (22), le premier élément d'encliquetage (14) et le deuxième profil d'encliquetage (22) forment une liaison par complémentarité de formes.

5. Connexion à enfichage selon l'une des revendications 1 à 4, **caractérisée en ce que** les profils d'encliquetage (16, 22) et l'au moins un talon (18) sont configurés sur un côté d'appui (17) du corps de fiche (3) conçu pour accueillir le bras d'encliquetage (11).

6. Connexion à enfichage selon la revendication 5, **caractérisée en ce que** l'au moins un talon (18) est disposé transversalement par rapport à la direction de déplacement du corps de blocage (2) sur le côté d'appui (17) du corps de fiche (3) en étant décalé latéralement par rapport au premier profil d'encliquetage (16).

7. Connexion à enfichage selon l'une des revendications 1 à 6, **caractérisée en ce que** dans la direction de déverrouillage, une surface de butée (32) du deuxième élément d'encliquetage (40, 41) qui fait face à la portion de couvercle (10) du corps de blocage (2) est mise en butée par complémentarité de formes contre une surface dirigée dans la direction de verrouillage de l'au moins un talon (18) du corps de fiche (3).

8. Connexion à enfichage selon l'une des revendications 1 à 7, **caractérisée en ce que** les profils d'encliquetage (16, 22) sont respectivement réalisés sous la forme de rainures d'encliquetage dans un côté d'appui (17) du corps de fiche (3).

9. Connexion à enfichage selon l'une des revendications 1 à 8, **caractérisée en ce qu'**il existe deux talons (18), lesquels sont respectivement disposés latéralement en accompagnement du premier profil d'encliquetage (16), et un deuxième élément d'encliquetage (40, 41) est respectivement associé à chacun des deux talons, les deux deuxièmes éléments d'encliquetage (40, 41) étant disposés des deux côtés du premier élément d'encliquetage (14) à l'extrémité du bras d'encliquetage (11) du corps de blocage (2).
